Europäisches Patentamt

European Patent Office

Office européen des brevets

(11) Publication number: **0 224 377 B1**

(12) **EUROPEAN PATENT SPECIFICATION**

(45) Date of publication of patent specification: **15.01.92**   (51) Int. Cl.⁵: **G01P 3/52**

(21) Application number: **86309056.9**

(22) Date of filing: **19.11.86**

(54) **Speed detecting device.**

(30) Priority: **19.11.85 JP 259436/85**

(43) Date of publication of application:
**03.06.87 Bulletin 87/23**

(45) Publication of the grant of the patent:
**15.01.92 Bulletin 92/03**

(84) Designated Contracting States:
**DE GB**

(56) References cited:
**FR-A- 2 122 428**
**GB-A- 2 046 452**
**US-A- 3 755 745**
**US-A- 4 518 882**

**PATENT ABSTRACTS OF JAPAN, vol. 11, no.
110 (E-496)[2557], 7th April 1987 & JP-A-61
258 661 (MATSUSHITA ELECTRIC IND.
CO.,LTD) 17-11-1986**

(73) Proprietor: **KABUSHIKI KAISHA TOSHIBA
72, Horikawa-cho Saiwai-ku
Kawasaki-shi Kanagawa-ken 210(JP)**

(72) Inventor: **Aoyama, Noboru
1020 Hiyoshi-honcho Kohoku-ku
Yokohama-shi Kanagawa-ken(JP)**

(74) Representative: **Muir, Ian R. et al
HASELTINE LAKE & CO. Hazlitt House 28
Southampton Buildings Chancery Lane
London WC2A 1AT(GB)**

EP 0 224 377 B1

Rank Xerox (UK) Business Services

## Description

The present invention relates to a speed detecting device to be used for detecting the moving speed of an optical pickup which is moved radially relative to a compact disc (CD).

Generally, in a compact disk player, it is well known for a pick-up drive device with a linear motor as a driving source to be used for moving an optical pick-up radially relative to an optical disk. In such a compact disk player, a speed detecting device for detecting the moving speed of the optical pick-up is provided corresponding to the pick-up drive device and high-accuracy positioning of the optical pick-up is performed by controlling the linear motor in dependance upon the moving speed signal detected by the speed detecting device.

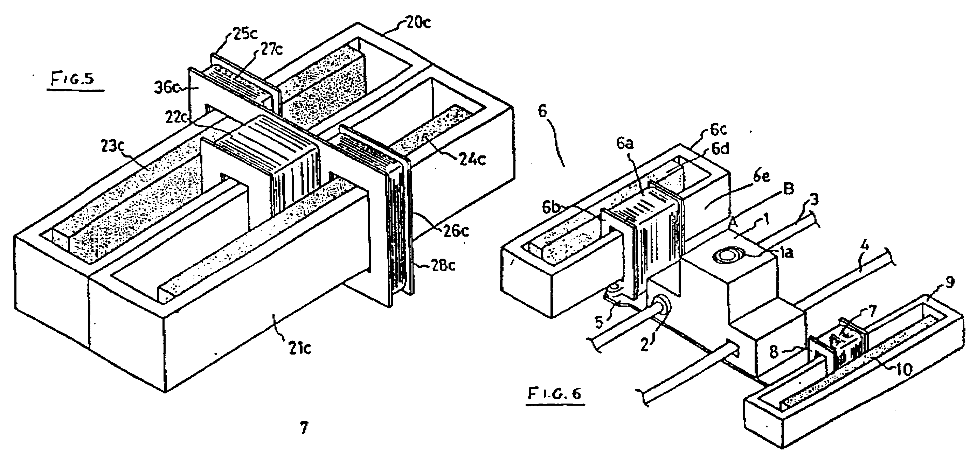

Figure 6 shows a conventional pick-up, pick-up drive device and speed detecting device. Numeral 1 designates an optical pick-up main body, the upper face of which faces an optical disk (not shown in the drawing), and which body is mounted on guide shafts 3 and 4 and is movable in the direction of the arrows A and B on bearings 2 (only one of which is shown in the drawing). On the upper surface position of the optical pick-up main body 1, there is a focusing lens 1a for an irradiating laser beam and, on the under surface portion, a support plate 5 is provided. At one end portion of the support plate 5, there is mounted a linear motor 6 for the radial drive. The linear motor comprises a coil unit, for example a bobbin 6b wound with a drive coil 6a, attached to the support plate 5, and a box-shaped magnetic member 6c or yoke, one side of which passes freely through the bobbin 6b. A permanent magnet 6d is attached to the inside of the magnetic member 6c, facing the drive coil 6a, to form a magnetic circuit.

To the other end of the support plate 5, there is attached a coil unit for detecting the optical pick-up moving speed, for example a bobbin 8 wound with a detecting coil 7, and one side of a box-shaped magnetic member 9 or yoke passes freely through the bobbin 8. A magnet 10 is attached to the inside of the magnetic member 9, facing the detecting coil 7, to form a magnetic circuit.

In the construction described above, the drive coil 6a is provided in a magnetic circuit, formed by the magnetic member 6c and the magnet 6d and, when a current is applied to the drive coil 6a, an energizing force conforming to Fleming's left hand rule is generated. The optical pick-up main body is thus moved in the direction of arrows A and B through the bobbin 6b, according to the direction of the current, and laser beams are radiated on to the optical disk (not shown in the drawing) through a focusing lens 1a. simultaneously, the support plate 5 with the attached bobbin 8 wound with the detecting coil 7 moves in the same direction. Since the detecting coil 7 is provided in a magnetic circuit formed with the magnetic member 9 and the magnet 10 and cuts the magnetic lines of flux therebetween, an inductive electromotive force is generated in the coil in proportion to the moving speed, conforming to Fleming's so-called right hand rule, and a detecting section (not shown in the drawing) detects the moving speed of the optical pick-up main body 1 from changes in the electromotive force.

Through this operation, the detecting section (not shown in the drawing) controls application of the current to the drive coil 6a of the linear motor 6 and performs position control of the optical pick-up main body.

However, in such a speed detecting device there is the possibility that an external electric field can have a bad influence upon the performance of the construction. For example, when a linear motor is used as described above, it is necessary to provide it spaced from the position of the speed detecting device so that the device is not detrimentally influenced by the magnetic field. As a result, the combined structure is of large size.

Also, there is some clearance produced between the bearing 2 and the guide shaft 3 of the optical pick-up main body 1 and, when the drive coil 6a is moved at a slight amplitude and at a high speed in the direction of the arrows A and B, the drive section of the optical pick-up main body 1 is rotated by the inertial force of the drive system around the axis of inertia positioned between the drive coil 6a and the detecting coil 7. As a result, the drive coil 6a and the detecting coil 7 have a speed component (speed vector) in opposite directions one from the other. The phase of the control signal fed back from the detecting coil 7 to the drive coil 6 is reversed and the drive system oscillates resulting in degradation of control.

The same problems arise in the case of a signal treatment devise with an optical pick-up utilised in an acoustic instrument such as a laser disc and in the case of an optical pick-up and a magnetic head utilised in an information device such as an optical disk memory device and a magnetic disk memory device.

Patent Specifications GB-A-2 046 452 and FR-A-2 122 428 show arrangements where two detection coils are used to detect movement and the arrangement of which and the signals of which are combined in such a way as to cancel errors caused by extraneous magnetic fields.

The present invention seeks to provide a speed detecting device so designed as to facilitate miniaturization and to use a dual coil detection arrangement similar to that of the two referenced documents so as to improve the detecting accuracy.

According to the present invention there is provided a speed-detecting device for a pick up moved by a linear motor having a drive coil, the speed detecting device comprising two coils and a magnetic circuit arrangement positioned relative to one another such that magnetic lines of flux of the magnetic circuit arrangement pass through the coils, and such that relative movement at the speed to be detected can be effected between the coils and said magnetic circuit arrangement, so that the coils cross lines of flux and electrical signals are generated therein representative of the speed of relative movement, and the coils being arranged such that an extraneous magnetic field passing through the coils will produce an error signal with an electrical sense relative to the speed detecting signal in one coil which is opposite to that produced in the other coil or in the other coils, characterised in that the magnetic circuit arrangement is formed by first and second rectangular frame-shaped magnetic circuit members each with opposing sides and with a permanent magnet mounted on one opposing side of the member so as to give rise to magnetic flux lines that cross to the opposite opposing side of the member, and with the magnetic members being positioned each with an opposing side adjacent an opposing side of the other;

in that the drive coil of said linear motor surrounds the two adjacent magnetic circuit member sides so as to interact with the said flux lines; and

in that the first and second coils each surround the non-adjacent opposing side of its respective magnetic circuit member and the first and second coils and said drive coil are linked so as to move together.

For a better understanding of the present invention reference will now be made, by way of example, to the accompanying drawings, in which:

Figure 1 is a perspective view of part of a speed detecting device,

Figure 2 is a diagrammatic representation of the arrangement of Figure 1,

Figure 3 is a circuit diagram of a second embodiment of a speed detecting device,

Figure 4 is a perspective drawing of parts of an alternative arrangement to Figure 1,

Figure 5 shows a perspective drawing an embodiment of part of a speed detecting device according to the present invention, and

Figure 6 is a perspective drawing showing a conventional pick-up drive device and speed detecting device.

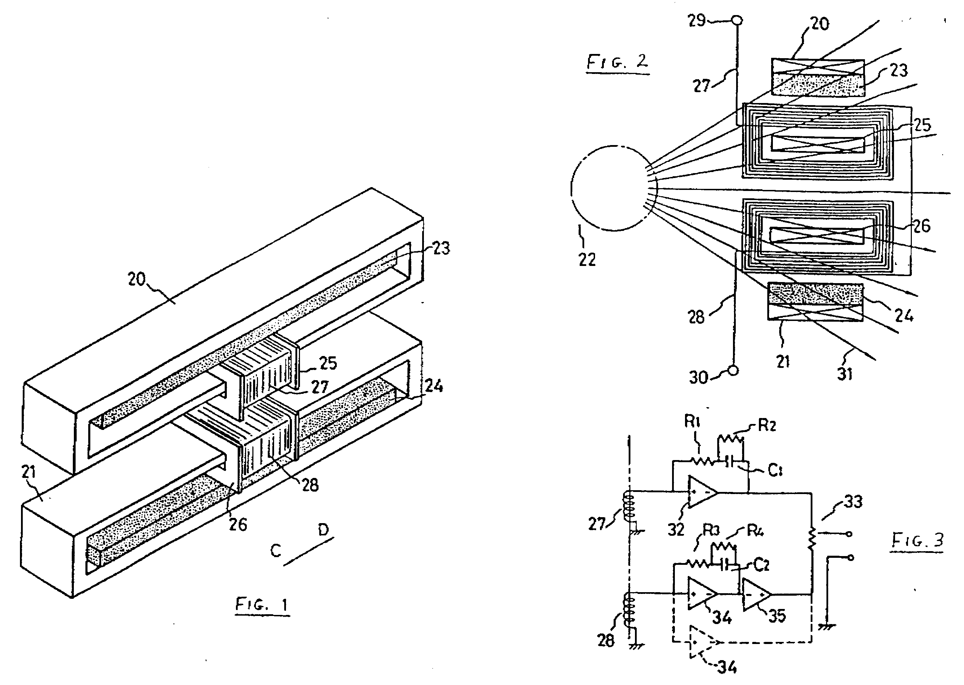

Figure 1 of the drawings shows part of a dual coil speed detecting device. In the drawing, the numerals 20 and 21 designate two magnetic members, a first magnetic member and a second magnetic member, which may be the only two or two of a larger number of magnetic members. As shown in figure 2, the first and the second magnetic members 20 and 21 are substantially symmetrically positioned relative to an external magnetic field generating section 22 and first and second magnets 23 and 24, each magnetized to provide two poles (N, S), are attached each to one side portion of the inside of each of the magnetic members 20 and 21 to form two magnetic circuits. Also, on the opposite side portions of the first and the second magnetic members 20 and 21, are provided first and second bobbins 25 and 26 each constituting a coil unit, and mounted so that they can be moved simultaneously in the direction of the arrows C and D. The first and second bobbins 25 and 26 are linked to the optical pick-up 1 (see Fig. 6') and carry respectively, first and a second coils 27 and 28 which are wound in reverse direction with respect to each other. One end of the first coil 27 is connected to one end of the second coil 2 and to earth. The other ends, output ends 29 and 30, are connected to a detecting section through, for example, a mixing unit not shown in the drawing.

In the construction described above, the first and the second coils 27 and 28 of the first and the second bobbin 25 and 26 are simultaneously moved in the same direction with respect to the first and second magnets 23 and 24 upon movement of the pick-up. The momentary induced electromotive forces in the coils are input to the mixing unit (not shown in the drawing) from each output end (29, 30), mixed and fed as input to a detecting section (not shown in the drawing) to detect the moving speed.

In this embodiment, when a leakage flux 31 from an external magnetic field generating section 22 passes through the first and the second coil 27 and 28, equal and opposite voltages are generated by the leakage flux 31, and are therefore offset. Only the change of electromotive force in accordance with movement relative to the first and second magnets 23 and 24 is, therefore extracted and output in the mixing unit (not shown in the drawing) to detect the speed.

As described above, the speed detecting device has a construction, in which the first and the second coils 27 and 28, one of which is wound in reverse direction, can be moved simultaneously and the disturbing effect of the leakage flux 31 from the external flux generating section 22 can be securely prevented. It is possible, therefore, to perform a speed detection of high-precision and also to provide the device at a position adjacent to the external flux generating section 22, so that it is possible to promote more miniaturization than with a conventional known device.

Further, for improving the operation of the device a balance adjusting equalizer circuit can be added to the output ends 29 and 30 of the first and second coil 27 and 28, as shown in Figure 3, so that imbalance of the first and second coils 27 and 28 can be corrected.

That is, when the speed signal content of the outputs of the first and second coils 27 and 28 are of opposite polarity sense, one end of a variable resistance 33 is connected to the output end 29 of the first coil 27 through a frequency characteristic correction circuit comprising an operational amplifier 32, resistances R1 and R2, and a capacitor C1, and the other end of the variable resistance 33 is connected to the output end 30 of the second colt 28 through a frequency characteristic correction circuit comprising an operational amplifier 34, inverting amplifier 35, resistances R3 and R4, and a capacitor C2 to provide a balance adjustment of displacement of the positions of the first and the second bobbins 25 and 26. If the speed signal content of the outputs of the first and the second coils 27 and 28 is of the same polarity sense, it is sufficient to provide only the operational amplifier 34, together with the resistances R3 and R4 and capacitance C2, between the output end 30 of the second coil 28 and the other end of the variable resistance 33, as shown in broken lines in the drawing.

In the above described arrangement, the first and the second bobbins 25 and 26 are described as being moved. However, the speed detecting device is not limited to this. It is possible to fix the first and the second bobbins 25 and 26 and to make the first and the second magnets 23 and 24 movable.

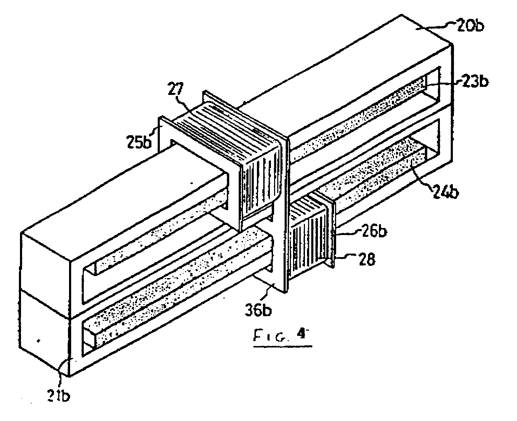

Further, the magnetic circuit and coil assemblies of the speed detecting device may alternatively, for example, be constructed in accordance with Figure 4. In this Figure, the same elements as in Figure 1 are given like reference characters and have the same function and therefore, detailed description is not required.

In the arrangement of Figure 4, for further promoting miniaturization, the device is designated so that first and second bobbins 25b and 26b are connected by a connection plate 36b. In this arrangement, for simplifying the first and the second bobbins 25b and 26b, connected by the support plate 36b, are inserted into mounting positions surrounding the first and second magnets 23b and 24b.

Figure 7 shows an embodiment of the present invention which enables reduction of the number of parts of the speed measurement and pick up driving device, improves the function, and promotes miniaturization. The device is designed so that a support plate 36c is provided on first and a second magnetic members 20c and 21c both for an external field generating coil 22c, for a linear drive motor, as well as for first and second bobbins 25c and 26c. The magnetic circuits magnets and coils are arranged and connected similarly to those of Fig. 4 with the addition of the linear drive motor coil.

In the embodiments described above, description is given of devices in which two coils are used. However, the number of coils is not limited to two, but substantially the same effect can be obtained by providing a plurality of coils of suitable dimensions so that they can be moved relatively and simultaneously and by winding at least one of the coils in reverse direction to the other coils.

As explained above, the present invention can provide a speed detecting device so designed as to facilitate miniaturization and improve detection accuracy.

## Claims

1. A speed-detecting device for a pick up moved by a linear motor having a drive coil (22c), the speed detecting device comprising two coils (27c,28c) and a magnetic circuit arrangement positioned relative to one another such that magnetic lines of flux of the magnetic circuit arrangement pass through the coils (27c,28c), and such that relative movement at the speed to be detected can be effected between the coils (27c,28c) and said magnetic circuit arrangement, so that the coils (27c,26c) cross lines of flux and electrical signals are generated therein representative of the speed of relative movement, and the coils (27c,28c) being arranged such that an extraneous magnetic field passing through the coils (27c,28c) will produce an error signal with an electrical sense relative to the speed detecting signal in one coil which is opposite to that produced in the other coil or in the other coils, characterised in that the magnetic circuit arrangement is formed by first and second rectangular frame-shaped magnetic circuit members (20c,21c) each with opposing sides and with a permanent magnet (23c,24c) mounted on one opposing side of the member (20c,21c) so as to give rise to magnetic flux lines that cross to the opposite opposing side of the member, and with the magnetic members (20c,21c) being positioned each with an opposing side adjacent an opposing side of the other;

in that the drive coil (22c) of said linear motor surrounds the two adjacent magnetic circuit member sides so as to interact with the said flux lines; and

in that the first and second coils (27c,28c) each surround the non-adjacent opposing side of its respective magnetic circuit member (20c,21c) and the first and second coils (27c,28c) and said drive coil (22c) are linked so as to move together.

**Revendications**

1. Dispositif de détection de vitesse pour un lecteur phonographique déplacé par un moteur linéaire ayant une bobine d'entraînement (22c), le dispositif de détection de la vitesse comprenant deux bobines (27c, 28c) et un agencement de circuits magnétiques disposés mutuellement pour que les lignes du flux magnétique de l'agencement de circuits magnétiques passent dans les bobines (27c, 28c) et pour qu'un mouvement relatif à la vitesse que l'on veut détecter puisse s'effectuer entre les bobines (27c, 28c) et ledit agencement de circuits magnétiques, de sorte que les bobines (27c, 28c) traversent des lignes de flux et des signaux électriques y sont produits qui sont représentatifs de la vitesse de mouvement relatif, les bobines (27c, 28c) étant agencées pour qu'un champ magnétique externe traversant les bobines (27c, 28c) produise un signal d'erreur ayant un sens électrique par rapport au signal de détection de vitesse dans une bobine qui est opposé à celui produit dans l'autre bobine ou les autres bobines, caractérisé en ce que l'agencement de circuits magnétiques est formé d'un premier et d'un second éléments de circuit magnétique en forme de cadre rectangulaire (20c, 21c), chacun avec des côtés opposés et avec un aimant permanent (23c, 24c) monté sur un côté opposé de l'élément (20c, 21c) de manière à produire des lignes de flux magnétique qui traversent le côté opposé en face de l'élément, les éléments magnétiques (20c, 21c) étant positionnés chacun avec un côté opposé adjacent à un côté opposé de l'autre;

en ce que la bobine d'entraînement (22c) dudit moteur linéaire entoure les deux côtés adjacents des éléments de circuits magnétiques, de manière à réagir avec lesdites lignes de flux; et

en ce que les première et seconde bobines (27c, 28c) entourent chacune le côté opposé non adjacent de leur élément de circuit magnétique respectif (20c, 21c) et que la première et la seconde bobines (27c, 28c) et ladite bobine d'entraînement (22c) sont reliées de manière à se déplacer ensemble.

**Patentansprüche**

1. Geschwindigkeitserfassungsvorrichtung für einen Aufnehmer, die von einem Motor mit einer Antriebsspule (22c) bewegt wird, wobei die Geschwindigkeitserfassungsvorrichtung zwei Spulen (27c, 28c) und eine Magnetkreisanordnung enthält, die relativ zueinander so positioniert sind, dass die magnetischen Feldlinien der Magnetkreisanordnung durch die Spulen (27c, 28c) treten, und des weiteren derart, dass die Relativbewegung bei der zu erfassenden Geschwindigkeit zwischen den Spulen (27c, 28c) und der Magnetkreisanordnung so erfolgen kann, dass die Spulen (27c, 28c) Feldlinien schneiden und darin elektrische Signale erzeugt werden, die ein Mass für die Geschwindigkeit der Relativbewegung sind, und wobei die Spulen (27c, 28c) so angeordnet sind, dass ein durch die Spulen (27c, 28c) tretendes Streufeld ein Fehlersignal mit einer solchen elektrischen Richtung relativ zum Geschwindigkeitssignal in einer Spule erzeugt, dass dieses zu dem in der anderen Spule oder in den anderen Spulen erzeugten Signal entgegengesetzt gerichtet ist, dadurch gekennzeichnet, dass die Magnetkreisanordnung durch erste und zweite, rechteckige, rahmenförmige Magnetkreisteile (20c, 21c) gebildet wird, deren jeder einander gegenüberliegende Seiten und einen Permanentmagneten (23c, 24c) aufweist, der auf einer der gegenüberliegenden Seiten des Teiles (20c, 21c) so montiert ist, dass die magnetischen Feldlinien, welche durch die gegenüberliegende der einander gegenüberliegenden Seiten des Teiles treten, zunehmen, und wobei jeder der Magnetteile (20c, 21c) so positioniert ist, dass eine der einander gegenüberliegenden Seiten angrenzend an die andere, gegenüberliegende Seite angeordnet ist;

dadurch, dass die Antriebsspule (22c) des Linearmotors die zwei aneinander angrenzenden Magnetkreisteile so umgibt, dass es zu einer Wechselwirkung mit den magnetischen Feldlinien kommt; und

dadurch, dass die ersten und zweiten Spulen (27c, 28c) je die nicht aneinandergrenzende, gegenüberliegende Seite des entsprechenden Magnetkreisteiles (20c, 21c) umgeben, und die ersten und zweiten Spulen (27c, 28c) und die Antriebsspule (22c) so miteinander verbunden sind, dass sie sich miteinander bewegen.

Fig. 2

Fig. 3

Fig. 1

FIG. 4

EP 0 224 377 B1

FIG.5

FIG.6

EP 0 224 377 B1

8